# EUROPEAN PATENT APPLICATION

(11) **EP 1 216 969 A1**
(43) Date of publication of application: **26.06.2002**
(21) Application number: 01403087.8
(22) Date of filing: 30.11.2001
(51) Int. Cl.: C03C 25/50, C03C 25/12, G02B 6/16

(54) **Ultraviolet curable coatings for optical fiber for wet-on-wet application**

(30) Priority: 20.12.2000 US 739677
(71) Applicant: ALCATEL, 75008 Paris (FR)
(72) Inventor: Stupak, Peter, Granite Falls, NC 28630 (US); Khudyakov, Igor, Hickory, NC 28601 (US)
(74) Representative: Cabinet Hirsch

(57) **Abstract**

The present invention is a method of making an optical fiber, and the fiber itself, where the primary and secondary coatings are cured simultaneously with UV radiation. The method of making the optical fiber comprises applying (5) the primary coating on a glass fiber (optical fiber) where the primary coating has a first photoinitiator which allows the primary coating to be cured by a first wavelength range of UV light, applying (10) the secondary coating over the primary coating where the secondary coating contains a second photoinitiator whose UV reaction spectra is substantially different from the first photoinitiator in the primary coating and which allows the secondary coating to be cured through exposure to UV radiation in a second wavelength range of UV light, and finally by exposing (50) the optical fiber, having the two coatings, to a UV light source which contains wavelengths in both wavelength ranges of the first and second photoinitiators, so that the primary and secondary coatings cure simultaneously. The present invention is directed to eliminating the problems of uncontrollable post-cure hardening of the coatings, that exist in present manufacturing methods, while at the same time greatly reducing the time and costs involved in making optical fibers by reducing the height of the draw tower and increasing production speeds, without compromising the quality or durability of the fiber coatings.

## Description

### BACKGROUND OF THE INVENTION

### Field of the Invention

The present invention generally relates to the field of optical fibers, in particular the simultaneous curing of both the primary and secondary coatings of an optical fiber with ultraviolet radiation where the secondary coating is applied "wet" over an uncured "wet" primary coating.

### Discussion of Related Art

Optical fibers are very small diameter glass strands which are capable of transmitting an optical signal over great distances, at high speeds, and with relatively low signal loss as compared to standard wire or cable networks. The use of optical fibers in today's technology has developed into many widespread areas, such as: medicine, aviation, communications, etc. Because of this development, there is a growing need to produce optical fibers of better quality at faster rates and lower costs.

Many of the areas of use for optical fibers, such as communications, require the optical fibers be protected from various destructive elements, such as adverse weather, moisture, impact damage, etc. This protection for the individual fibers comes from the fiber coatings. Today, most optical fibers have two coatings, which are often referred to as the primary and secondary coatings. The primary coating is applied onto the surface of the optical fiber, with the secondary coating being applied on top of the primary coating. The main function of the primary coating is to provide a soft "cushion" for the glass fiber, protecting it from shock damage. The main purpose of the secondary coating is to provide a semi-rigid protective shell to protect both the primary coating and the glass fiber from adverse environmental elements, as well as physical damage.

One of the most common methods of making optical fibers today is by a process often referred to as the "draw" process. In this process, a large glass preform is made. The preform is the actual material that the glass fiber (optical fiber) is made from. The preform has two layers, the inner layer, or core, and the outer layer, or cladding. The core is made from very pure silica glass, while the cladding is made from silica glass which is of a purity level lower than that of the core. The difference in purity results in the core and cladding having two different indices of refraction. This difference then causes the light waves which are transmitted in the core to be reflected off of the surface of the cladding as the light travels through the optical fiber core.

Once the preform is made, the next step is to "draw" the preform into a glass fiber (optical fiber) with the desired diameter. One of the most common means to accomplish this is through the use of a "draw tower". The "draw tower" is a production apparatus which has all of the major stages required to manufacture an optical fiber from a glass preform to the finished fiber. In this process the glass preform is typically suspended above the apparatus with the bottom most end of the preform entering into a furnace. The furnace uniformly melts the preform such that the preform exits the furnace as a very thin diameter optical glass fiber. The cross-section of the glass fiber retains the core and cladding layers. The rate the preform is moved into the furnace can be regulated to allow the maintenance of a constant diameter in the optical fiber. Once the glass fiber leaves the furnace it is generally cooled. This cooling can be either active or passive cooling. Active cooling employs a means to actively cool the fiber, and passive cooling just uses the ambient air and room temperature to cool the fiber.

After the glass fiber is cooled to a preset temperature then the fiber is typically coated with the primary coating. This is generally done in a coating die. The primary coating is applied in such a way as to completely cover the fiber. This primary coating is then cured or hardened. Once the primary coating has been cured or hardened, the secondary coating is then applied to completely cover the primary coating. The secondary coating is then cured so as to harden it and secure it to the primary coating. Once this process is complete then the fiber is generally considered an optical fiber, as commonly known and understood. Finally the optical fiber is wound past a capstan and onto a reel or spool.

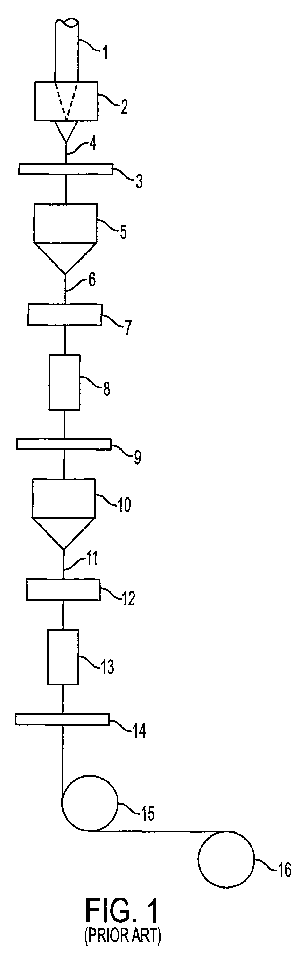

A diagrammatical representation of this prior art process can be found in Figure 1. Figure 1 shows that in the prior art, the glass preform 1 is suspended above a furnace 2 which uniformly heats the glass of the preform 1 such that the glass fiber 4 exits the furnace 2 at the diameter required for the optical fiber. After exiting the furnace 2 the fiber 4 may enter a diameter measuring device 3 which measures the diameter of the fiber 4 as it exits the furnace 2. The measuring device 3 may be connected to a control system (not shown) which increases or decreases the speed at which the preform 1 is inserted into the furnace 2 to change the diameter of the fiber 4, at the exit of the furnace 2.

After the measuring device 3, the fiber passes through the first coating die 5. The first coating die 5 applies the primary coating to the fiber. The primary coating is applied such that it completely surrounds and encapsulates the glass fiber 4. The primary coating is placed on the fiber in liquid form, otherwise known as "wet." The glass fiber exits the first coating die 5 with only the primary coating in its "wet" stage 6. The fiber with only the wet primary coating 6 then passes through a concentricity gauge 7 which checks the concentricity of the primary coating.

Following the concentricity gauge 7 the fiber passes through the first curing chamber 8. In general this curing chamber 8 will be a UV curing chamber where the primary coating is radiated with UV light causing the photoinitiator, in the primary coating, to initiate the cure of the primary coating. The speed of the fiber as it passes through the chamber, along with the intensity of the light are the major factors to be governed during this stage of the process. The faster the draw speed of the fiber, the more intense the light must be to ensure that the coating is properly cured. If the draw speed is slow, the intensity can be less because the exposure to the UV rays will be increased, as any one given point on the fiber 6 will be in the curing chamber 8 for a longer period of time.

Once the primary coating has been sufficiently cured, the fiber exits the first curing chamber 8 and enters a measuring device 9 which measures the diameter of the primary coating to ensure that the diameter of the coating is within set limits. The measuring device 9 is usually coupled with a control system (not shown) which regulates the parameters within the first coating die 8 to ensure the proper diameter of the primary coating is maintained. After the measuring device 9, the fiber then passes through the second coating die 10, which applies the secondary coating, in liquid form, over the cured primary coating. The second coating die 10 operates in a similar fashion to the primary coating die 8, except it usually applies a different coating material.

Upon exiting the second coating die 10, the fiber is now coated with both the primary and secondary coatings 11. The fiber then, usually, passes through a second concentricity gauge 12, which performs the same function as the previous gauge 7. This is followed by the second curing chamber 13. As with the first curing chamber 8, the second curing chamber 13 usually employs UV radiation to cure the secondary coating, and again, the speed of the fiber and the intensity of the lights are factors dictating the degree of cure. This is where many of the prior art problems lie. The heat generated from the second curing process along with the additional UV radiation causes the primary coating (which has already been cured) to be overcured or suffer from post-cure hardening, which is very undesirable in optical fiber coatings. Following the second curing chamber 13, the fiber again passes through a diameter measuring and control device 14, which controls the diameter of the secondary coating applied to the fiber. At this stage the manufacturing process of the optical fiber is essentially complete. The optical fiber 11 is completely cured. Finally, the fiber 11 passes by a capstan 15 and is then wound on a spool device or reel 16.

As stated earlier, the coatings of the optical fiber are mainly used to provide chemical, mechanical and environmental protection to the glass fiber core and cladding. To accomplish this purpose the two layers are usually made from different materials. Generally the primary coating is relatively soft (having a relatively low Modulus of Elasticity of 1-2 MPa) when compared to the secondary coating and is used as a cushion or shock protection for the glass fiber. The secondary coating is relatively hard (having a relatively high Modulus of Elasticity of 30-60 MPa) and provides a semi-rigid protective shell for the fiber and primary coating. The most common types of coatings used are ultraviolet (UV) curable coatings. These are coatings which have a photoinitiator component used in the coating composition which allow the curing of the coatings to be accelerated by exposure to UV radiation.

Photoinitiators function by absorbing energy which is radiated by a UV-, or sometimes a visible, light source. This energy absorption then initiates polymerization of the liquid coating placed on the fiber, and accelerates the hardening of the coating. This acceleration greatly reduces the production time of optical fibers, making production more profitable.

However, this method of curing optical fiber coatings is not without its problems. Among other things, the curing process can generate a large amount of heat in the coatings of the fiber. This heat generally comes from hot UV/Visible lamps by convection or by infrared irradiation accompanying the UV- or visible light of a lamp during cure, and from the exothermic polymerization (i.e. cure) itself. This heat also contributes in curing the coatings, but can cause serious problems. One of the most important problems or considerations is uncontrollable "post cure hardening." This is where the coating continues to cure beyond the desired level of cure, after the curing process has stopped. This is very undesirable as post-cure hardening may cause problems with the fiber coating or the fiber itself. Therefore, it is desirable in the fiber optic industry to greatly limit or eliminate completely the problems associated with post-cure hardening.

It should be noted, at this point, that certain levels of post-cure hardening will always take place because the termination of irradiation of the coating never results in an immediate cessation of the polymerization occurring in the coating materials. Macroradicals formed during irradiation continue to react even after the irradiation has stopped. However, greater control over the amount and extent of post-cure hardening is very desirable. The present invention aids in providing this control over post-cure hardening while reducing the height and overall costs of the draw tower used to make the optical fiber from a fiber preform.

As stated earlier, the primary coating should be relatively soft, to protect the glass fiber from microbending. But when the primary coating suffers from post-cure hardening it can become much harder than is desirable. This added hardness makes the glass fiber more susceptible to microbending. Microbending is the formation of microscopic bends in the glass fiber, which will reduce the effectiveness of the fiber by reducing the magnitude of transmitted light power, i.e. attenuation. One of the major factors leading to overcuring (post-cure hardening) is the two step cure process discussed above. In this process the primary coating is applied and then cured, and then the secondary coating is applied and then cured. As the secondary coating is being cured, the primary coating is being heated up and cured for a second time by the UV radiation intended to cure the secondary coating. This results in having primary coatings much harder than is desirable.

Additionally, the use of two separate curing chambers increases the height of the draw tower and the associated costs. The higher the draw tower, the higher the facility which houses it must be, along with having duplicate components at different stages in the draw tower. Further, the higher the draw tower the longer it takes to draw a fiber from a preform.

Moreover, optical fibers are often placed in multiple fiber ribbons, where many individual fibers are secured to each other through a ribbon matrix material. This ribbon matrix material is very similar to the coatings used on the fibers, usually requiring a UV curing stage. This "third" UV curing stage provides an additional curing step for the primary coating, resulting in a primary coating hardness which is much more than is desirable for optimal optical fiber performance.

One method employed in the prior art to address the problems associated with post-cure hardening of the coatings is found U.S. Patent No. 6,018,605 to Mills et al. This patent disclosure tries to avoid the problems of post-cure hardening of prior methods by making the primary coating with a photoinitiator that reacts to light in a relatively short wavelength UV spectrum, while having the secondary coating made with a photoinitiator which reacts to light in a relatively long wavelength spectrum. However, like the prior art Mills discloses using two separate curing chambers and stages in the draw tower to cure the two coatings. Therefore, the disclosure of Mills does not eliminate the problems and costs associated with higher draw towers, which increase the draw time of optical fibers while increasing costs and the number of components that require repair and replacement.

Another method disclosed in the prior art is the use of visible light to cure one or both of the coatings. These methods also have severe drawbacks. Because visible light is used to cure the one or both of the coatings, the problems of uncontrollable post-cure hardening during handling of the fiber under ambient light are not avoided. After the curing process is complete, the optical fiber is then exposed to daylight, or light emitted from other sources during the manufacturing process. This irradiation by ambient light during handling or processing of the fibers will subject the primary coating to additional post-cure hardening, as the primary coating's photoinitiator reacts to visible light. Further, as with the previously discussed process, the optical fiber will be exposed to additional visible and ultraviolet light during coloring of the optical fibers or when the fibers are secured in a ribbon matrix material. This exposure to visible light during the various stages of production, handling, and installation of the optical fibers will subject the primary coating to severe "post-cure" hardening. As stated earlier, this increases the hardness and Modulus of Elasticity of the primary coating, thus making the glass fiber more susceptible to microbending and preventing the primary coating from performing it's intended function as a "cushion" for the fiber.

These problems associated with post-cure hardening under ambient light are further magnified when the fibers are stored on spools. As the fibers are stored on the spools, the outer-most fibers are exposed to ambient light, while the inner-most fibers are not. Therefore, the outer-most fibers will have significantly more post-cure hardening then the inner-most fibers. This creates the problem of having a single length of fiber with different Modulus of Elasticity characteristics in the coating, throughout the length of the fiber. This inconsistency is highly undesirable in the commercial fiber market, and can lead to portions of the spooled fiber being discarded, as being too hard.

Another disadvantage of the above method is the relatively slow draw speed that must be used. As described, the above process only uses a single visible light source, which primarily emits radiation in the visible light range, with only a minor amount of ultraviolet radiation. This disproportional emission of energy requires very slow draw speed of the fiber through the curing chamber to ensure that the secondary coating is not "under-cured." This would happen because of the relatively small amount of ultraviolet radiation emitted from the single visible light source that is used. If the line speed is too fast the secondary coating will not receive enough ultraviolet energy to properly cure. However, as a consequence of the slow draw speed required, the possibility for the primary coating to overcure is increased. As the fiber is drawn slowly through the visible light to ensure the secondary coating is properly cured from the residual ultraviolet rays, there is increased exposure time of the primary coating to the visible light, resulting in overcure of the primary coating before it even enters the ambient light or daylight during handling, processing and installation.

An additional problem common with using photoinitiators which react under visible light is the inability to have clear coatings. In certain applications, it is desirable for optical fiber coatings to be clear. But, many visible light photoinitiators are colored and will impart color to the coatings when they are cured. This limits the application and use of fibers which are cured with these visible light photoinitiators.

These problems with the prior art greatly affect the speed at which optical fiber can be manufactured, and increase the risk that optical fiber coatings will be overcured or suffer from post-cure hardening which seriously affect the operability, efficiency and reliability of the optical fibers.

### SUMMARY OF THE INVENTION

The present invention is directed to eliminating the above problems of uncontrolled post-cure hardening, in the prior art, while at the same time greatly reducing the time and costs involved in making optical fibers, by reducing the height of the draw tower and increasing production speeds, without compromising the quality or durability of the fiber coatings.

The present invention is a method of making an optical fiber, and the fiber itself, where the primary and secondary coatings are cured simultaneously with ultraviolet radiation. The method of making the optical fiber comprises applying the primary coating to the glass fiber (optical fiber) where the primary coating has a first photoinitiator which allows the primary coating to be cured by a first wavelength range of UV light, applying the secondary coating over the primary coating where the secondary coating contains a second photoinitiator whose absorption spectra in the UV-region is substantially different from the first photoinitiator in the primary coating and which allows the secondary coating to be cured through exposure to UV radiation in a second wavelength range of UV light, and finally by exposing the optical fiber, having the two coatings, to a UV light source which contains wavelengths in both wavelength ranges of the first and second photoinitiators, so that the primary and secondary coating cure simultaneously.

As a note, the absorption spectra of photoinitiators in a UV-region are usually their action spectra. That means, that an excitation of a photoinitiator in one or another absorption band in a UV-region results in photochemical reactions leading to free radicals of the initiator.

The present invention avoids many of the problems with the prior art by greatly reducing the risks of uncontrolled post-cure initiated by visible light by eliminating a complete curing step, and only using ultraviolet radiation. By curing both coatings in a single step, with UV radiation, the primary coating will not be subjected to a second cure stage resulting in overcure of the primary coating, and will not be subject to post-cure hardening due to exposure to visible light. Further, the use of two different UV photoinitiators for each of the coatings will ensure that as the two coatings are cured simultaneously, the secondary coating (outside coating) will not cure before the primary coating. This prevents problems associated with having the secondary coating cure prior to the primary coating, which blocks the UV-light from reaching the primary coating and creates problems because the primary coating is under-cured, thus providing little or no protection for the glass fiber.

It is not to say in the present invention that there will be no overlap at all in the UV absorption spectra of the two photoinitiators, but the overlap would be minimal to ensure proper cure of both the primary and secondary coatings.

The present invention will result in a reduction in the height of the optical fiber draw tower caused by the reduction in steps and equipment required, which would greatly increase productivity and profits while maintaining, if not improving, the quality and durability of the primary and secondary coatings.

### BRIEF DESCRIPTION OF THE DRAWINGS

The advantages, nature and various additional features of the invention will appear more fully upon consideration of the illustrative embodiment of the invention which is schematically set forth in the drawings, in which:
Figure 1 is a diagrammatical representation of an optical fiber manufacturing system or "draw tower" as known and used in the prior art;
Figure 2 is a cross-sectional view of a conventional optical fiber, showing both the primary and secondary coatings;
Figure 3 is a diagrammatical representation of an optical fiber manufacturing system, or "draw tower," embodying the present method and apparatus of the invention as disclosed; and
Figure 4 is a diagrammatical representation of the single-step curing chamber employed in the present invention to simultaneously cure the primary and secondary coatings.

### DETAILED DESCRIPTION OF THE INVENTION

The present invention will be explained in further detail by making reference to the accompanying drawings, which do not limit the scope of the invention in any way.

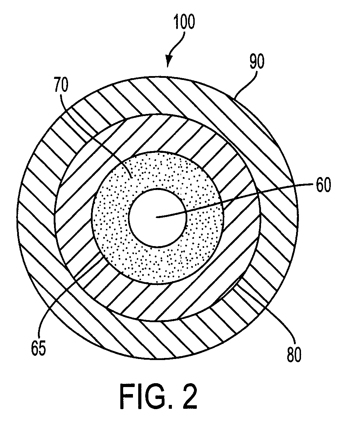

Turning to Figure 2, it depicts a completed optical fiber 100 which can be manufactured under either the prior art method (shown in Figure 1 and discussed earlier) or the method of the present invention. The typical optical fiber includes the glass fiber 65, which is made up of the pure silica glass core 60 and the silica glass cladding 70, which completely surrounds the core 60. The glass fiber is then completely surrounded by the primary coating layer 80 and a secondary coating layer 90, where the primary coating layer is positioned between the secondary coating layer 90 and the glass fiber 65.

Generally, the primary coating is selected from common urethane acrylate coatings which are used and known in the prior art. However, the primary coating is not limited to these types of coatings and can use other coatings commonly used in the industry. Primary coatings usually contain difunctional urethane acrylate oligomers, reactive diluents (which are commonly mono- or difunctional acrylates of low molecular mass), and one or more photoinitiators. Urethane oligomers are a product of the condensation of diisocyantes like isophorone diisocyanate (IPDI) or others with polyols (polyesters, polyethers, polycarbonates, polybutadienediol and others). Typical photoinitiators include aromatic carbonyl compounds, which undergo α-cleavage in the excited triplet state (known in photochemistry as Norrish splitting I). Commonly used photoinitiators are known under trade names Darocur® or Irgacure® and are manufactured by Ciba Additives of Tarrytown, New York. Similar compounds are commercially available from other photoinitiator manufactures as well. Other types of photoinitiators used are compounds that while being photoexcited into a triplet state abstract hydrogen or electrons from a donor. The donor (or coinitiator) is usually amine. These second type of photoinitiators usually include benzophenone and its derivatives, isopropylthioxanthen-9-one (ITX), and some dyes, among others. These initiators and coinitiators are available from UCB Radcure of Smyrna, Georgia, Sartomer of Exton, Pennsylvania, and First Chemical of Pascagoula, Mississippi. The photoinitiator, in the primary coating, typically has photoactive absorption bands with absorption maxima usually in the UV region of the spectrum. In the preferred embodiment, the photoinitiator in the primary coating will have an absorption band with a maximum in near UV (λ 350-400 nm) part of the spectrum. A UV bulb for this application can be the widely used D-bulb of Fusion, Inc. of Gaithersburg, Maryland, which has an emission spectrum which protrudes into the visible light region. Further, the photoinitiator in the primary coating is preferred to have photoreactive absorption bands in the range of 360-400 nm.

The secondary coating is also selected from, but is not to be limited to, the common urethane acrylate coatings which are used and known in the prior art. The general composition of the secondary coating is generally similar to that of the primary coating, but usually there are differences. The common composition of the secondary coating is similar to that of the primary coatings (see the discussion above). Generally, the composition of the relatively hard secondary coating includes oligomoners of lower molecular mass than those of the primary coatings and may include acrylates with functionality of more than two. However, unlike in the primary coating, in the preferred embodiment, the photoinitiator in the secondary coating is to have an absorption band(s) substantially different from that of the photoinitiator in the primary coating. Unlike the photoinitiator in the primary coating, the photoinitiator in the secondary coating will have a relatively shortwave absorption band, in the range of 300-360 nm. The range of wavelengths of the photoinitiator in the secondary coating of the preferred embodiment has an absorption maximum between 310-340 nm.

Although it is desirable in the present invention for the absorption spectra of the two photoinitiators used to not overlap, it is not necessary to the present invention. A minor or minimal overlap in spectra will not defeat the purpose and benefits of the present invention. In one of the embodiments of the invention, it was found that such photoinitiators of Ciba Additives of Tarrytown, New York as Darocur 4265 for the primary coating and Irgacure 651 for the secondary coating have photoactive peak absorbance spectra which overlap only a minor amount, and permit the simultaneous curing of the primary and secondary coatings. Darocur 4265 has a reactive/absorption band in the area of 280-420 nm peak absorbance range while Irgacure 651 has a range of 260-380 nm. This overlap is minor and the fact that the absorption spectrum of Darocur 4265 is red-shifted compared to the spectrum of Irgacure 651 allows the two coatings to be cured simultaneously with UV light source like the D-Bulb (previously discussed). It should be noted that although the D-Bulb is referenced the present invention is not limited to the use of this bulb. In fact, any conventional or commonly used light source may be used as long as it meets the requirements of the photoinitiators which are used in the primary and secondary coatings. Additionally, two or more excimer electrodless lamps, which emit very narrow bands, can also be used for simultaneously curing as discussed above. For example, it is possible to use two lasers emitting different wavelengths of UV-light, as the UV-light source, to simultaneously cure the primary and secondary coatings

Several other commercially available couples of photoinitiators for simultaneously curing the primary and secondary coatings can be used. Examples of possible photoinitiators for the primary coating include Irgacure 784, Irgacure 819, Irgacure 1700 and Irgacure 1850, while additional examples of possible photoinitiators for the secondary coating include Irgacure 184, Irgacure 369, Darocur 1173, Irgacure 1000, and Irgacure 500.

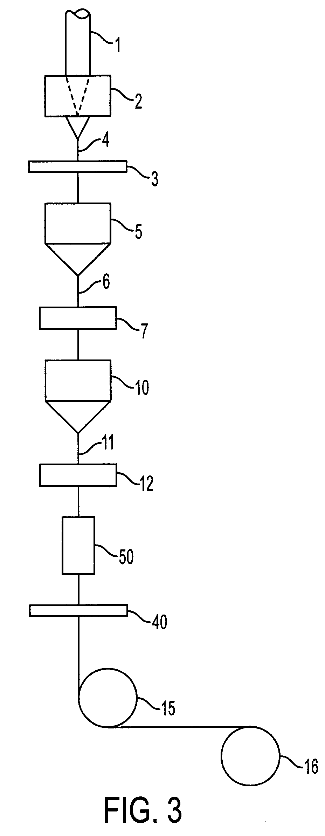

Now turning to Figure 3, which is a schematic representation of the draw tower used in the present invention. It is very similar in construction to that used in the prior art, but due to the advantages of the present invention has less components and can be smaller in height. This will allow a dramatic decrease in manufacture time for optical fiber while reducing costs. As shown in Figure 3, a standard glass preform 1 is used and uniformly heated in a furnace 2, as in the prior art. The glass fiber 4, drawn from the furnace 2 may pass through a fiber diameter measuring device 3, which is coupled to a control system (not shown) which can regulate the speed at which the fiber 4 is drawn, to ensure it maintains the desired diameter. The fiber 4 will then pass through the first coating die 5, which will completely coat the fiber with the primary coating composition. The primary coating is applied in liquid form. The fiber then may pass through a concentricity gauge or diameter monitoring device 7 which will check the diameter of the primary coating and control the operation of the first coating die 5 through a control system (not shown). However, unlike the prior art method shown in Figure 1, the fiber, with the "wet" or uncured primary coating, will then pass through the second coating die 10 which applies the secondary coating in liquid form over the uncured primary coating. As discussed previously, the coatings can be of any known or used optical fiber coating, but must have two different photoinitiators such that there is no substantial overlap of the photoactive peak absorbance ranges of the different photoinitiators. Following the application of the secondary coating, the fiber may pass through a second concentricity gauge or diameter monitoring device 12 which will check the diameter of the secondary coating and control the second coating die 10 through a control system (not shown) to ensure proper diameter of the secondary coating. Following this coating application, the glass fiber with the uncured primary and secondary coatings 11 will enter the single-stage curing chamber 50 of the present invention. This chamber 50 will expose the coated fiber 11 to at least two ranges of UV radiation, which cover the absorption spectra of the photoinitiators used in both the primary and secondary coatings. The structure of the single step curing chamber 50 will be discussed in more detail below. In the preferred embodiment, the length of time for a point on the fiber to pass through the single-step curing chamber 50 will be related to the intensity of the UV rays and will be governed by the characteristics of the photoinitiators used. During this step the photoinitiators in each of the coatings are simultaneously photoexcited by the simultaneous exposure to the UV radiation, causing the simultaneous initiation of cure of both the primary and secondary coatings.

It is important to note that if the absorption bands of the photoinitiators in the primary and secondary coatings overlap by more than an insubstantial amount, the primary coating would not be properly cured. This is because as the UV rays pass through the secondary coating the secondary coating will be cured first, and as it cures it will prevent sufficient UV radiation from reaching the primary coating, thus causing the primary coating to be "under-cured." This is why it is necessary to avoid substantial overlap in the photoactive peak absorbance ranges of the photoinitiators used.

Finally, as the completely cured optical fiber 11 exits the single-step curing chamber 50 the fiber 11 may pass through a final measuring device 40 which can be coupled with a control system (not shown) to monitor the final diameter of the optical fiber 11 and control the drawing process to ensure the required coating diameter is maintained. Following this stage, the fiber is then wound past a capstan 15 and spooled on a reel or spooling device 16.

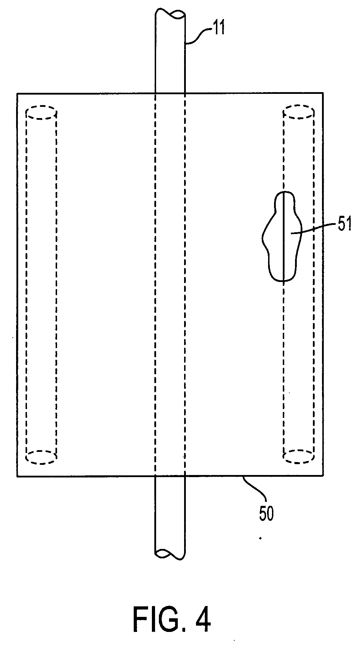

The curing chamber 50 used in the present invention can be of any common or conventionally used chamber used in optical fiber production, as long as the bulb or bulbs 51 used emit UV light in the ranges required to properly cure both the primary and secondary coatings. One example could be a curing chamber as shown in Figure 4, which has two bulbs 51 in a reflector, having the fiber passing through the center of the reflector. Another possible chamber configuration is using one powerful lamp in the focal point of an elliptical reflector with the fiber passing through the other focal point of the elliptical reflector. Further, it is common to use a infrared screen between the lamp or lamps and the fiber to prevent the IR light from being irradiated on the fiber, thus increasing the coating temperature to undesirable levels. When using two or more lamps it is possible for each individual lamp to emit a separate wavelength band (for the primary and secondary coatings individually) or for the lamps to emit the same broad wavelength band covering both coatings.

It is of course understood that departures can be made from the preferred embodiments of the invention by those of ordinary skill in the art without departing from the spirit and scope of the invention that is limited only by the following claims.

## Claims

1. A method of simultaneously curing primary and secondary coatings (80, 90) for optical fibers, comprising:
- applying (5) a primary coating on an optical fiber, said primary coating containing a first photoinitiator allowing said primary coating to be cured through exposure to ultraviolet radiation having a first wavelength range;
- applying (10) a secondary coating over said primary coating, said secondary coating containing a second photoinitiator whose ultraviolet reaction spectra is substantially different from said first photoinitiator allowing said secondary coating to be cured through exposure to ultraviolet radiation having a second wavelength range; and
- exposing (50) said optical fiber with said primary coating and said secondary coating to an ultraviolet light source containing wavelengths in said first and second wavelength ranges so as to cause said first photoinitiator and said second photoinitiator to cure said primary coating and secondary coating simultaneously.

2. The method according to claim 1, wherein said first photoinitiator has an absorption maximum less than λ 400 nm.

3. The method according to claim 1 or 2, wherein said second photoinitiator has an absorption maximum less than λ 360 nm.

4. The method according to claim 1, 2 or 3, wherein said first photoinitiator has an absorption maximum in the area of λ 360 - 400 nm.

5. The method according to one of claims 1 to 4, wherein said second photoinitiator has an absorption maximum in the area of λ 300 - 360 nm.

6. The method according to one of claims 1 to 5, wherein said first photoinitiator has an absorption maximum in the range of λ 360 - 370 nm, and said second photoinitiator has an absorption maximum in the range of λ 300 - 360 nm.

7. The method according to one of claims 1 to 5, wherein said first photoinitiator has an absorption maximum in the range of λ 371 - 380 nm, and said second photoinitiator has an absorption maximum in the range of λ 300 - 360 nm.

8. The method according to one of claims 1 to 5, wherein said first photoinitiator has an absorption maximum in the range of λ 381 - 390 nm, and said second photoinitiator has an absorption maximum in the range of λ 300 - 360 nm.

9. The method according to one of claims 1 to 5, wherein said first photoinitiator has an absorption maximum in the range of λ 391 - 400 nm, and said second photoinitiator has an absorption maximum in the range of λ 300 - 360 nm.

10. The method according to one of claims 1 to 5, wherein said first photoinitiator has an absorption maximum in the range of λ 360 - 400 nm, and said second photoinitiator has an absorption maximum in the range of λ 300 - 310 nm.

11. The method according to one of claims 1 to 5, wherein said first photoinitiator has an absorption maximum in the range of λ 360 - 400 nm, and said second photoinitiator has an absorption maximum in the range of λ 311 - 320 nm.

12. The method according to one of claims 1 to 5, wherein said first photoinitiator has an absorption maximum in the range of λ 360 - 400 nm, and said second photoinitiator has an absorption maximum in the range of λ 321 - 330 nm.

13. The method according to one of claims 1 to 5, wherein said first photoinitiator has an absorption maximum in the range of λ 360 - 400 nm, and said second photoinitiator has an absorption maximum in the range of λ 331 - 340 nm.

14. The method according to one of claims 1 to 5, wherein said first photoinitiator has an absorption maximum in the range of λ 360 - 400 nm, and said second photoinitiator has an absorption maximum in the range of λ 341 - 350 nm.

15. The method according to one of claims 1 to 5, wherein said first photoinitiator has an absorption maximum in the range of λ 360 - 400 nm, and said second photoinitiator has an absorption maximum in the range of λ 351 - 360 nm.

16. The method according to one of claims 1 to 15, wherein the ultraviolet light source comprises at least one UV bulb which emits UV radiation in wavelengths within both the first wavelength range and the second wavelength range.

17. The method according to one of claims 1 to 15, wherein the ultraviolet light source comprises at least one first UV bulb which emits UV radiation within the first wavelength range and at least one second UV bulb which emits UV radiation within the second wavelength range.

18. An optical fiber (100), comprising:
- a glass fiber (65);
- a primary coating(80), wherein said primary coating contains a first photoinitiator, allowing said primary coating to be cured through exposure to ultraviolet radiation having a first wavelength range;
- a secondary coating (90) over said primary coating, wherein said secondary coating contains a second photoinitiator whose a ultraviolet spectra is substantially different from said first photoinitiator, allowing said secondary coating to be cured through exposure to an ultraviolet radiation having a second wavelength range; and
wherein said primary coating and secondary coating are cured simultaneously through exposure to an ultraviolet light source containing wavelengths in said first and second wavelength ranges.

19. The optical fiber according to claim 18, wherein said first photoinitiator has an absorption maximum less than λ 400 nm.

20. The optical fiber according to claim 18 or 19, wherein said second photoinitiator has an absorption maximum less than λ 360 nm.

21. The optical fiber according to claim 18, 19 or 20, wherein said first photoinitiator has an absorption maximum in the area of λ 360 - 400 nm.

22. The optical fiber according to one of claims 18 to 21, wherein said second photoinitiator has an absorption maximum in the area of λ 300 - 360 nm.

23. The optical fiber according to one of claims 18 to 22, wherein said first photoinitiator has an absorption maximum in the range of λ 360 - 370 nm, and said second photoinitiator has an absorption maximum in the range of λ 300 - 360 nm.

24. The optical fiber according to one of claims 18 to 22, wherein said first photoinitiator has an absorption maximum in the range of λ 371 - 380 nm, and said second photoinitiator has an absorption maximum in the range of λ 300 - 360 nm.

25. The optical fiber according to one of claims 18 to 22, wherein said first photoinitiator has an absorption maximum in the range of λ 381 - 390 nm, and said second photoinitiator has an absorption maximum in the range of λ 300 - 360 nm.

26. The optical fiber according to one of claims 18 to 22, wherein said first photoinitiator has an absorption maximum in the range of λ 391 - 400 nm, and said second photoinitiator has an absorption maximum in the range of λ 300 - 360 nm.

27. The optical fiber according to one of claims 18 to 22, wherein said first photoinitiator has an absorption maximum in the range of λ 360 - 400 nm, and said second photoinitiator has an absorption maximum in the range of λ 300 - 310 nm.

28. The optical fiber according to one of claims 18 to 22, wherein said first photoinitiator has an absorption maximum in the range of λ 360 - 400 nm, and said second photoinitiator has an absorption maximum in the range of λ 311 - 320 nm.

29. The optical fiber according to one of claims 18 to 22, wherein said first photoinitiator has an absorption maximum in the range of λ 360 - 400 nm, and said second photoinitiator has an absorption maximum in the range of λ 321 - 330 nm.

30. The optical fiber according to one of claims 18 to 22, wherein said first photoinitiator has an absorption maximum in the range of λ 360 - 400 nm, and said second photoinitiator has an absorption maximum in the range of λ 331 - 340 nm.

31. The optical fiber according to one of claims 18 to 22, wherein said first photoinitiator has an absorption maximum in the range of λ 360 - 400 nm, and said second photoinitiator has an absorption maximum in the range of λ 341 - 350 nm.

32. The optical fiber according to one of claims 18 to 22, wherein said first photoinitiator has an absorption maximum in the range of λ 360 - 400 nm, and said second photoinitiator has an absorption maximum in the range of λ 351 - 360 nm.
